(19) Europäisches Patentamt

European Patent Office

Office européen des brevets

(11) **EP 1 707 917 A2**

(12) **EUROPEAN PATENT APPLICATION**

(43) Date of publication:
04.10.2006 Bulletin 2006/40

(51) Int Cl.:
*G01B 9/02* (2006.01)

(21) Application number: 06251360.1

(22) Date of filing: 15.03.2006

(84) Designated Contracting States:
**AT BE BG CH CY CZ DE DK EE ES FI FR GB GR HU IE IS IT LI LT LU LV MC NL PL PT RO SE SI SK TR**
Designated Extension States:
**AL BA HR MK YU**

(30) Priority: **01.04.2005 JP 2005105699**

(71) Applicant: **SONY CORPORATION**
**Tokyo (JP)**

(72) Inventors:
- **Miyajima, Yasushi**
  **c/o Sony Corporation**
  **Shinagawa-ku,**
  **Tokyo (JP)**
- **Yamashita, Kosei**
  **c/o Sony Corporation**
  **Shinagawa-ku,**
  **Tokyo (JP)**
- **Sako Yoichiro**
  **c/o Sony Corporation**
  **Shinagawa-ku,**
  **Tokyo (JP)**
- **Terauchi, Toshiro**
  **c/o Sony Corporation**
  **Shinagawa-ku**
  **Tokyo (JP)**

- **Inoue, Makoto**
  **c/o Sony Corporation**
  **Shinagawa-ku,**
  **Tokyo (JP)**
- **Asukai, Masamichi**
  **c/o Sony Corporation**
  **Shinagawa-ku**
  **Tokyo (JP)**
- **Takehara, Mitsuru**
  **c/o Sony Corporation**
  **Shinagawa-ku, Tokyo (JP)**
- **Nakamura, Takatoshi**
  **c/o Sony Corporation**
  **Shinagawa-ku, Tokyo (JP)**
- **Sasaki, Toru**
  **c/o Sony Corporation**
  **Tokyo (JP)**
- **Matsuda, Masafumi**
  **c/o Sony Corporation**
  **Tokyo (JP)**

(74) Representative: **Nicholls, Michael John**
**J.A. KEMP & CO.**
**14, South Square**
**Gray's Inn**
**London WC1R 5JJ (GB)**

(54) **Method of supplying content data and playlist htereof**

(57)    A displacement detection apparatus, a displacement measurement apparatus and a fixed point detection apparatus can highly accurately detect a fixed point or a displacement by minimizing the influence of the disturbances of polarization due to the bend and/or the stress of the optical fiber for transmitting light emitted from a light source to a detector. The present invention provides a displacement detection apparatus including a light source that emits light, a condenser lens that gathers light emitted from the light source, an optical fiber that transmits light gathered by the condenser lens, a polarization dissolving element that dissolves polarization of light gathered by the condenser lens, a diffraction grating fitted to an object of measurement to receive and diffract light transmitted by the optical fiber, and a light receiving section that receives light diffracted by the diffraction grating, the displacement of the object of measurement being detected by the quantity of diffracted light received by the light receiving section.

EP 1 707 917 A2

**(Cont. next page)**

# FIG.1

**Description**

The present invention contains subject matter related to Japanese Patent Application JP 2005-092938 filed in the Japanese Patent Office on March 28, 2005, the entire contents of which being incorporated herein by reference.

This invention relates to a displacement detection apparatus for detecting a displacement by detecting diffracted light produced by a diffraction grating, a displacement measuring apparatus for measuring the quantity of displacement by utilizing interference of diffracted light produced by a diffraction grating and a fixed point detection apparatus for locating a fixed point by such diffracted light.

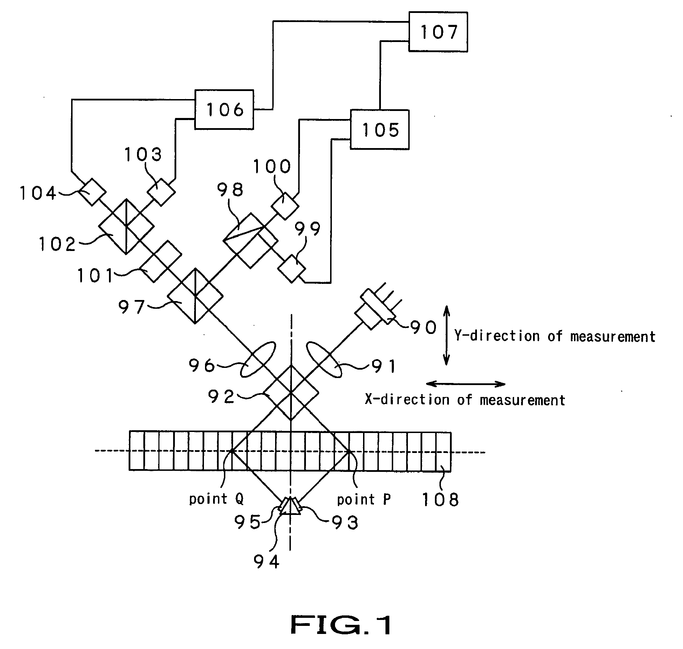

Grating interferometers for detecting the positional displacement of a diffraction grating fitted to a moving scale by utilizing interference of light are known. Now, a known displacement detection apparatus will be described by referring to FIG 1 of the accompanying drawings. FIG. 1 illustrates a displacement detection apparatus using a transmission type diffraction grating.

Referring to FIG. 1, the displacement detection apparatus includes a coherent light source section 90, a first lens 91, a first polarization beam splitter (PBS) 92, a first 1/4 wave plate 93, a reflection prism 94, a second 1/4 wave plate 95, a second lens 96, a beam splitter (BS) 97, a second PBS 98, a first photoelectric transducer 99, a second photoelectric transducer 100, a third 1/4 wave plate 101, a third PBS 102, a third photoelectric transducer 103, a fourth photoelectric transducer 104, a first differential amplifier 105, a second differential amplifier 106 and an incremental signal generator 107 and is adapted to read a transmission type diffraction grating arranged on a scale 108.

The coherent light source 90 emits light to the first lens 91. The first lens 91 converges incident light to produce an appropriate beam of light and emits it to the first PBS 92. The first PBS 92 divides incident light into two beams of lights, one having an S-polarized light component and one having a P-polarized light component. S-polarized light is a polarized light component that oscillates vertically relative to the plane of incidence formed by light striking the boundary plane of light and light reflected by the boundary plane of light. P-polarized light is a polarized light component that oscillates horizontally relative to the plane of incidence. Light having an S-polarized light component is reflected by the first PBS 92, while light having a P-polarized light component is transmitted through the first PBS 92. If light from the coherent light source 90 is linearly polarized, the direction of polarization is inclined by 45 degrees before it enters the first PBS 92. By doing so, it is possible to make the intensity of light having an S-polarized light component and that of light having a P-polarized light component equal to each other.

Light having an S-polarized light component that is reflected by the first PBS 92 then strikes point P of the diffraction grating recorded on the scale 108, while light having a P-polarized light component that is transmitted through the first PBS 92 strikes point Q of the diffraction grating and the two light components are diffracted in the respective directions defined by the formula below:

$$\sin \theta_1 + \sin \theta_2 = n \cdot \lambda / \Lambda,$$

where $\theta_1$ represents the angle of incidence on the scale 108 and $\theta_2$ represents the angle of diffraction from the scale 108, whereas A represents the pitch (width) of the grating and $\lambda$ and n respectively represent the wavelength of light and the degree of diffraction.

If the angle of incidence at point P is $\theta_1 p$ and the angle of diffraction at point P is $\theta_2 p$, while the angle of incidence at point Q is $\theta_1 q$ and the angle of diffraction at point Q is $\theta_2 q$, the known displacement detection apparatus illustrated in FIG. 1 is adjusted to realize $\theta_1 p = \theta_2 p = \theta_1 q = \theta_2 q$. The degree of diffraction is same at point P and at point Q.

Light (having an S-polarized light component) diffracted at point P passes through the first 1/4 wave plate 93 and reflected vertically by the reflection prism 94 to return to point P and become diffracted by the diffraction grating. At this time, since the optical axis of the first 1/4 wave plate 93 is inclined by 45 degrees relative to the direction of polarization of incident light, the light that returns to point P is turned to light having a P-polarized light component.

On the other hand, light (having a P-polarized light component) diffracted at point Q passes through the second 1/4 wave plate 95 and reflected vertically by the reflection prism 94 to return to point Q and become diffracted by the diffraction grating. At this time, since the optical axis of the second 1/4 wave plate 95 is inclined by 45 degrees relative to the direction of polarization of incident light, the light that returns to point Q is turned to light having a S-polarized light component.

Thus, light diffracted at point P and light diffracted at point Q then return to the first PBS 92. Since the light that returns from point P has a P-polarized light component, it passes through the first PBS 92. On the other hand, since the light that returns from point Q has an S-polarized light component, it is reflected by the first PBS 92. Therefore, the light that returns from point P and the light that returns from point Q are put together by the first PBS 92 and converged by the second lens 96 to produce an appropriate beam of light, which then enters the BS 97.

The BS 97 divides the beam of light that enters it into two beams of light, which then enter the second PBS 98 and the third 1/4 wave plate 101 respectively. The second PBS 98 and the third 1/4 wave plate 101 are inclined by 45 degrees relative to the direction of polarization of incident light.

Light that enters the second PBS 98 is divided into two beams of light, one having an S-polarized light component and one having a P-poiarized light component. Light having an S-polarized light component is made to enter the first photoelectric transducer 99 and light having a P-polarized light component is made to enter the second photoelectric transducer 100. An interference signal of Acos (4Kx + δ) is obtained at the first photoelectric transducer 99 and also at the second photoelectric transducer 100, where K represents $2\pi/\Lambda$ and x represents the quantity of displacement while δ represents the initial phase. The signal obtained at the first photoelectric transducer 99 and the signal obtained at the second photoelectric transducer 100 produce a phase difference of 180 degrees.

Light having a P-polarized light component and light having an S-polarized light component that that enter the third 1/4 wave plate 101 are circularly polarized in opposite direction to produce linearly polarized light when put together, which linearly polarized light then enters the third PBS 102. Light that enters the third PBS 102 is divided into light having an S-polarized light component and light having a P-polarized light component, of which light having an S-polarized light component enters the third photoelectric transducer 103 whereas light having a P-polarized light component enters the fourth photoelectric transducer 104. The direction of polarization of linearly polarized light that enters the third PBS 102 makes a full turn when the diffraction grating is moved in the x-direction by $\Lambda/2$. Therefore, an interference signal of Acos (4Kx + δ') is obtained at the third photoelectric transducer 103 and also at the fourth photoelectric transducer 104 just like at the first photoelectric transducer 99 and at the second photoelectric transducer 100. The signal obtained at the third photoelectric transducer 103 and the signal obtained at the fourth photoelectric transducer 104 produce a phase difference of 180 degrees.

The third PBS 102 is inclined by 45 degrees relative to the second PBS 98. Therefore, the signals obtained at the third photoelectric transducer 103 and at the fourth photoelectric transducer 104 show a phase difference of 90 degrees from the signals obtained at the first photoelectric transducer 99 and at the second photoelectric transducer 100.

The first differential amplifier 105 differentially amplifies the electric signals input from the first photoelectric transducer 99 and the second photoelectric transducer 100 and outputs a signal obtained by canceling the DC (direct current) component of the interference signal to the incremental signal generator 107. Similarly, the second differential amplifier 106 differentially amplifies the electric signals input from the third photoelectric transducer 103 and the fourth photoelectric transducer 104 and outputs a signal obtained by canceling the DC (direct current) component of the interference signal to the incremental signal generator 107.

FIG. 2 shows a known fixed point detection apparatus that is disclosed in Patent Document 1 [Jpn. Pat. Appln. Laid-Open Publication No. Hei 4-324316] by the applicant of the present patent application. The fixed point detecting apparatus includes a stationary section 110 and a movable section 130 movable along the direction of measurement (X-direction), of which the stationary section 110 includes an optical system 111 and a detection system 121, whereas the movable section 130 includes a substrate 131 and two volume type holographic diffraction gratings 132, 133 arranged on the top surface of the substrate 131.

The optical system 111 includes a light source 112 such as a semiconductor laser that emits a laser beam, a collimator lens 113 and a condenser lens 114. The detection system 121 includes a pair of light receiving elements 122, 123 and an electric processing circuit 129.

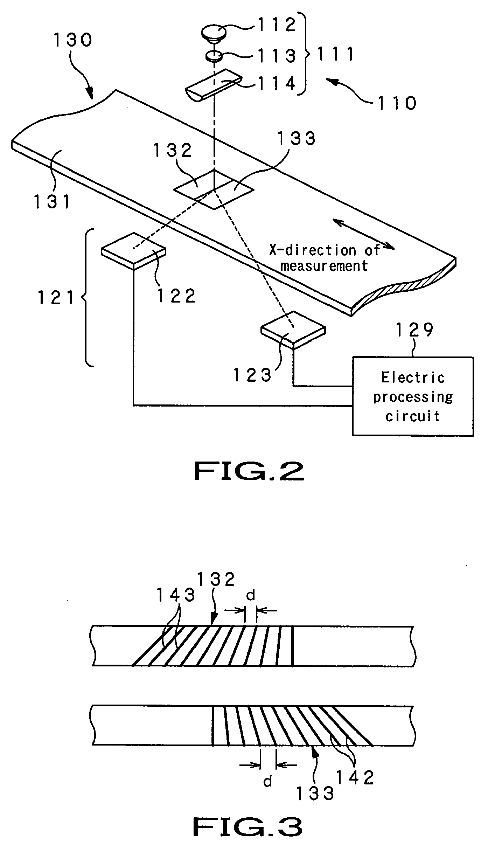

FIG. 3 schematically illustrates the holographic diffraction gratings 132, 133 that the above-described fixed point detection apparatus includes. The holographic diffraction gratings 132, 133 are formed by using transmission type / volume type holograms. The holographic diffraction gratings 132, 133 will be referred to simply as holograms hereinafter. As shown in FIG. 3, the intervals or the pitch d of each of the holograms 132, 133 is sequentially and successively changed in the direction of measurement of the fixed point detection apparatus. The distribution surfaces 142, 143 that produce the grating intervals or the grating pitch d of the holograms 132, 133 are inclined respectively relative to the top surfaces of the holograms 132, 133 and the angle of inclination is also sequentially and successively changed in the direction of measurement of the fixed point detection apparatus. As incident light is diffracted by the holograms 132, 133, the diffraction efficiency successively changes in the direction of measurement of the fixed point detection apparatus.

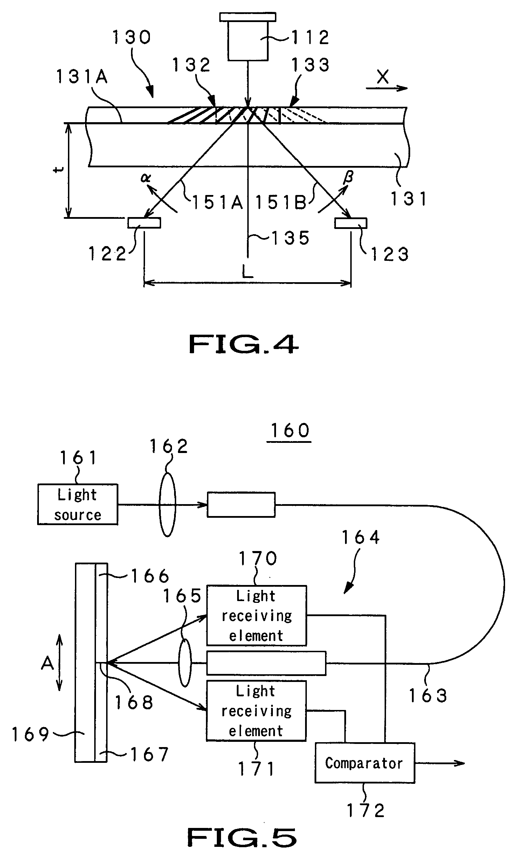

FIG. 4 schematically illustrates a principal part of the fixed point detection apparatus of FIG. 2. As shown in FIG. 4, the two holograms 132, 133 are arranged transversally side by side on the top surface 131A of the substrate 131. The two holograms 132, 133 are symmetrically arranged relative to a center plane 135. In other words, the angles of inclination of the distribution surfaces 142, 143 of the holograms 132, 133 that are sequentially and successively changed are arranged symmetrically relative to the center plane 135 and the grating intervals or the grating pitch d of the holograms are sequentially and successively changed symmetrically relative to the center plane 135. The two holograms 132, 133 are arranged in such a way that their respective diffraction efficiencies are maximized differently in the direction of measurement.

As the movable section 130 is moved relative to the stationary section 110 and hence the movable section 130 is moved relative to the light receiving elements 122, 123 and the light source 112 that are stationary, light diffracted by the first hologram 132 is detected by the first light receiving element 122 whereas light diffracted by the second hologram 133 is detected by the second light receiving element 123.

Since the diffraction efficiencies of the two holograms 132, 133 are maximized differently, the position of the peak of the curve of intensity of diffracted light as detected by the first light receiving element 122 and the position of the peak of the curve of intensity of diffracted light as detected by the second light receiving element 123 differ from each other. Therefore, there exists a point where the two curves of intensity of diffracted light intersect each other and hence the two intensities are equal to each other. The point is the fixed point as detected by the fixed point detection apparatus.

Meanwhile, fixed point detection apparatus and displacement measuring apparatus formed by using light emitting diodes and lasers in recent years show an enhanced level of resolution and are possible to provide a level of accuracy of measurement of less than 1 nm. On the other hand, the sensors are not allowed to emit heat for such precision measurements so that a technique of separating the sensors from the light source and transmitting a laser beam by way of an optical fiber is often employed.

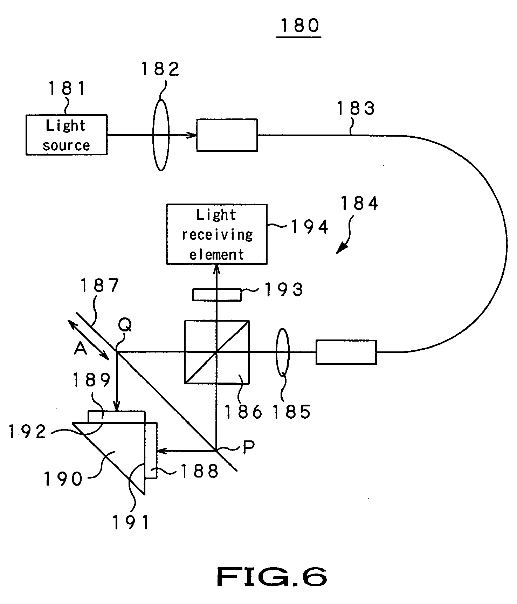

FIG 5 schematically illustrates a fixed point detection apparatus 160 adapted to transmit the light beam emitted from a light source 161 to a detecting section 164 by way of an optical fiber 163 of the polarization holding type and detect a fixed point. Referring to FIG 5, the light beam emitted from the light source 161 is transmitted to a condenser lens 162 by way of an optical fiber 163 of the polarization holding type and irradiated onto a pair of diffraction gratings 166 and 167 arranged side by side on an object of measurement 169. Then, the light beam diffracted at the adjacently located edges 168 of the two diffraction gratings 166 and 167 is received by two light receiving elements 170 and 171 and the quantities of light received by the two light receiving elements 170 and 171 are compared by a comparator 172. The point where the signal produced as a result of the comparison shows a given magnitude is determined to be a fixed point.

Thus, the fixed point detection apparatus 160 of FIG. 5 employs an optical fiber 163 of the polarization holding type as pointed out above in order to transmit a light beam emitted from the light source 161 in a condition where the polarized component is retained. However, the polarization can be disturbed and the disturbances by turn influence the detecting section 164 to make is impossible to stably locate the fixed point when the stress and/or the bend, if slight, of the optical fiber can become influential.

This problem will be discussed in greater detail below. When the axis of polarization of the light beam coming out from the optical fiber 163 is changed slightly by the bend and/or the stress of the optical fiber 163, it means that the polarized component of the light beam that enters the diffraction gratings 166 and 167 changes. Generally, the diffraction efficiency of a diffraction grating depends not only on the polarized component of the incident light beam but only on the individual diffraction grating so that the quantity of light that enters the light receiving element 170 and the quantity of light that enters the light receiving element 171 change. Then, the fixed point detection apparatus erroneously recognizes that the fixed point is displaced.

Therefore, for a fixed point detection apparatus 160 to detect a fixed point on a stable basis, it is necessary to dissolve the axis of polarization of the light beam coming out from the optical fiber 163 as much as possible.

FIG. 6 schematically illustrates a displacement measurement apparatus 180 adapted to transmit a light beam emitted from a light source 181 to a detecting section 184 by way of an optical fiber 183 of the polarization holding type and observe the displacement of the object of measurement by the detection section 184. The light beam emitted from the light source 181 is transmitted to a condenser lens 185 by way of the optical fiber 183 of the polarization holding type and subsequently made to enter a polarization beam splitter 186. The polarization beam splitter 186 divides the incoming light beam into two light beams, which then enters a diffraction grating scale 187. The diffracted light obtained at the diffraction grating scale 187 is made to pass through $\lambda/4$ wave plates 188 and 189 and reflected by mirror planes 191 and 192 to return to the polarization beam splitter 186, follow the same light path in the opposite direction. The two light beams are then recombined in the polarization beam splitter 186 and directed to a polarization element 193. The interference signal obtained from the two light beams after passing through the polarization element 193 can be converted into an electric signal by means of a light receiving element 194 so that it is possible to measure the quantity by which diffraction grating is moved.

However, with the displacement measurement apparatus 180, the ratio of the quantities of light of the two light beams produced by the polarization beam splitter 186 changes when the polarization is disturbed under the influence of the stress and/or the bend of the optical fiber 183. The change in the ratio of the quantities of light of the two light beams appears as a change in the percentage modulation when the two light beams are recombined by the polarization beam splitter 186 to produce an interference signal and can give rise to fluctuations of the output signal. Since such fluctuations adversely affect the accuracy of measurement of displacement, it is necessary to dissolve the axis of polarization of the light beam emitted from the light transmission unit as much as possible.

In view of the above identified circumstances, it is desirable to provide a displacement detection apparatus, a displacement measurement apparatus and a fixed point detection apparatus that can highly accurately detect a fixed point or a displacement by minimizing the influence of the disturbances of polarization due to the bend and/or the stress of the optical fiber for transmitting light emitted from a light source to a detector.

According to the present invention, there is provided a displacement detection apparatus including: a light source that emits light; a condenser lens that gathers light emitted from the light source; an optical fiber that transmits light gathered by the condenser lens; a polarization dissolving element that dissolves polarization; a diffraction grating fitted to an object of measurement to receive and diffract light transmitted by the optical fiber; and a light receiving means for receiving light diffracted by the diffraction grating, the displacement of the object of measurement being detected by the quantity of diffracted light received by the light receiving means.

Thus, the displacement detection apparatus according to the present invention can minimize the influence of the disturbances of polarization due to the bend and/or the stress of the optical fiber by nullifying the polarization of light by means of the polarization dissolving element.

According to the present invention, there is provided a displacement measurement apparatus including: a light source that emits light; a condenser lens that gathers light emitted from the light source; an optical fiber that transmits light gathered by the condenser lens; a polarization dissolving element that dissolves polarization; a polarization beam splitter that divides the light transmitted by the optical fiber into two light beams; a diffraction grating that receives the two light beams produced by the polarization beam splitter and produces diffracted light beams; a phase plate that changes the polarizations of the two diffracted light beams produced by the diffraction grating; two reflection mirrors that reflect the two diffracted light beams having the respective polarizations changed by the phase plate to lead them to the diffraction grating by way of the phase plate; a polarization element that causes the two diffracted light beams led to the diffraction grating by the two reflection mirrors, diffracted by the diffraction grating, made to enter the polarization beam splitter and reflected by or transmitted through the polarization beam splitter to interfere with each other; and a light receiving element that receives the interference light obtained by the polarization element, the displacement of the object of measurement being detected by the quantity of interference light received by the light receiving element.

Thus, the displacement measurement apparatus according to the present invention can minimize the influence of the disturbances of polarization due to the bend and/or the stress of the optical fiber by nullifying the polarization of light by means of the polarization dissolving element.

According to the present invention, there id provided a fixed point detection apparatus including: a light source that emits light; a condenser lens that gathers light emitted from the light source; an optical fiber that transmits light gathered by the condenser lens; a polarization dissolving element that dissolves polarization; two diffraction gratings arranged side by side to receive and diffract light transmitted by way of the optical fiber; two light receiving means for receiving the light beams diffracted by the two diffraction gratings; and a comparing means for comparing the quantities of light received by the two light receiving means, a fixed point being determined according to the outcome of the comparison of the quantities of light received by the two light receiving means.

Thus, the fixed point detection apparatus according to the present invention can minimize the influence of the disturbances of polarization due to the bend and/or the stress of the optical fiber by nullifying the polarization of light by means of the polarization dissolving element.

As pointed out above, a displacement detection apparatus according to the present invention can minimize the influence of the disturbances of polarization due to the bend and/or the stress of the optical fiber by nullifying the polarization of light by means of the polarization dissolving element so that it can highly accurately detect a displacement. Examples of optical fibers that can be used for the purpose of the present invention include not only polarization holding fibers but also less costly single mode optical fibers. As single mode optical fibers can be used for the purpose of the present invention, it is no longer necessary to do a difficult operation of aligning axes of polarization. Additionally, examples of light sources that can be used for the purpose of the present invention include not only light emitting diodes but also super luminescence diodes, multimode lasers and single mode lasers. In other words, the advantages of any of such light sources can be fully exploited regardless of the coherence length of the light source.

As pointed out above, a displacement measurement apparatus according to the present invention can minimize the influence of the disturbances of polarization due to the bend and/or the stress of the optical fiber by nullifying the polarization of light by means of the polarization dissolving element so that it can highly accurately measure a displacement.

A fixed point detection apparatus according to the invention raises the extinction ratio to not lower than 20 dB by means of an extinction ratio changing means and light gathered by the condenser lens is made to enter the optical fiber, aligning the axis of polarization of the light with the optical axis of the optical fiber or an axis that is orthogonal to the optical axis of the optical fiber so that it can minimize the influence of the disturbances of polarization due to the bend and/or the stress of the optical fiber and hence highly accurately detect a fixed point.

The invention will be further described by way of example with reference to the accompanying drawings in which:-

FIG. 1 is a schematic illustration of a known displacement detection apparatus, showing the configuration thereof;
FIG. 2 is a schematic illustration of a known fixed point detection apparatus described in Patent Document 1, showing the configuration thereof;

FIG 3 is a schematic illustration of the holographic diffraction gratings of the fixed point detection apparatus illustrated in FIG. 2, showing the configuration thereof;

FIG. 4 is a schematic illustration of a principal part of the fixed point detection apparatus illustrated in FIG 2;

FIG. 5 is a schematic illustration of a known fixed point detection apparatus adapted to detect a fixed point by means of an optical fiber, showing the configuration thereof;

FIG 6 is a schematic illustration of a known displacement measurement apparatus adapted to measure a displacement by means of an optical fiber, showing the configuration thereof;

FIG. 7 is a schematic illustration of a displacement measurement apparatus according to the present invention, showing the configuration thereof;

FIG. 8 is a schematic cross sectional view of the polarization dissolving element of the apparatus of FIG. 7;

FIG. 9 is a schematic cross sectional view of an optical fiber of the polarization holding type that can be used for the purpose of the present invention;

FIG. 10 is a schematic illustration of a displacement measurement apparatus realized by modifying the apparatus of FIG. 7, showing the configuration thereof;

FIG. 11 is a schematic illustration of another displacement measurement apparatus realized by modifying the apparatus of FIG. 7, showing the configuration thereof;

FIG. 12 is a schematic illustration of a displacement measurement apparatus adapted to an increased number of times of diffraction;

FIG. 13 is a schematic illustration of a displacement measurement apparatus adapted to an increased number of times of diffraction and realized by modifying the apparatus of FIG. 12;

FIG. 14 is a schematic illustration of another displacement measurement apparatus adapted to an increased number of times of diffraction and realized by modifying the apparatus of FIG. 12;

FIG. 15 is a schematic illustration of a fixed point detection apparatus according to the present invention, showing the configuration thereof;

FIG. 16 is a graph of characteristics of a fixed point detection apparatus illustrating that the diffraction efficiency differs significantly between an S-polarized light component and a P-polarized light component;

FIG. 17 is a schematic illustration of a fixed point detection apparatus realized by modifying the apparatus of FIG 15; and

FIG. 18 is a schematic illustration of another fixed point detection apparatus realized by modifying the apparatus of FIG. 15.

Now, the present invention will be described in greater detail by referring to the accompanying drawings that illustrate preferred embodiments of displacement measurement apparatus and fixed point detection apparatus.

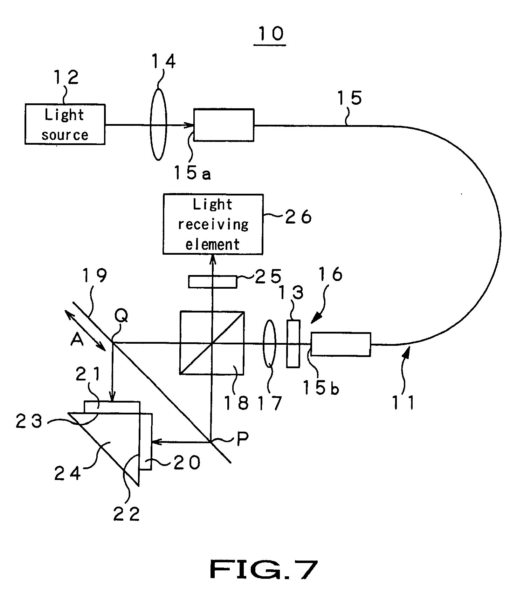

FIG 7 is a schematic illustration of a displacement measurement apparatus 10 according to the present invention, showing the configuration thereof Such a displacement measurement apparatus 10 typically fmds applications in the field of manufacturing semiconductors that require measurement of a quantity of movement of not larger than nanometer (nm) and in the field of manufacturing liquid crystals. Thus, in the displacement measurement apparatus 10, the heat emitted from the light source section can influence the sensor of the detecting section to make it impossible to measure movements on a stable basis. For this reason, it is necessary to prevent heat from being conducted to the detecting section 16. Therefore, the light source 12 is separated from the detecting section 16 and the light beam emitted from the light source 12 is transmitted to the detecting section 16 by way of an optical fiber 15.

Thus, the displacement measurement apparatus 10 includes a light source 12 for emitting a light beam, a condenser lens 14 for gathering the light beam emitted from the light source, an optical fiber 15 for transmitting the light beam gathered by the condenser lens 14 and a polarization dissolving element 13 for nullifying the polarization of the light beam transmitted by way of the optical fiber 15.

The displacement measurement apparatus 10 also includes another condenser lens 17 for gathering the light beam whose polarization is dissolved by the polarization dissolving element 13, a polarization beam splitter 18 for dividing the linear polarized light beam that is gathered by the condenser lens 17 into two light beams and a diffraction grating 19 fitted to an object of measurement that the two light beams produced by the division by the polarization beam splitter 18 enter.

The displacement measurement apparatus 10 further includes two phase plates 20 and 21 arranged to form an angle of 90° so as to shift the direction of polarization of the two light beams of diffracted light produced from the diffraction grating 19, a reflection prism 24 having two mirror planes 22 and 23 on which the two phase plates 20 and 21 are arranged respectively to form an angle of 90° so as to make the light beams of diffracted light produced from the diffraction grating 19 reciprocate on the two phase plates, a polarization element 25 for causing the light beams recombined by the polarization beam splitter 18 and entering it to interfere with each other and a light receiving element 26 for receiving interference light of the two light beams and converting the quantity of received light into an electric signal.

The light source 12, the condenser lens 14 and the optical fiber 15 are collectively referred to as optical transmission unit 11 hereinafter because they take a roie of transmitting the light beam emitted from the light source 12 to the detecting section 16. The detecting section 16 includes the polarization dissolving element 13, the condenser lens 17, the polarization beam splitter 18, the diffraction grating 19, the two phase plates 20 and 21, the two mirrors 22 and 23, the polarization element 25 and the light receiving element 26.

Now, each of the components of the displacement measurement apparatus 10 will be described in greater detail below. Firstly, the light source 12 emits a coherent light beam but it may be a light emitting diode that emits low coherent light. It may have polarizing characteristics or may not have any polarizing characteristics. Specific examples that can be used for the light source 12 include not only light emitting diodes but also super luminescence diodes, multimode lasers, single mode lasers and other light sources regardless of coherence length. This is because the polarization of light is nullified by the polarization dissolving element 13 in the displacement measurement apparatus 10.

The optical fiber 15 may be a less costly single mode type optical fiber that does not hold polarization. When a single mode type optical fiber that does not hold polarization, it is not necessary to regulate the axis of polarization of the light beam emitted from the light source 12.

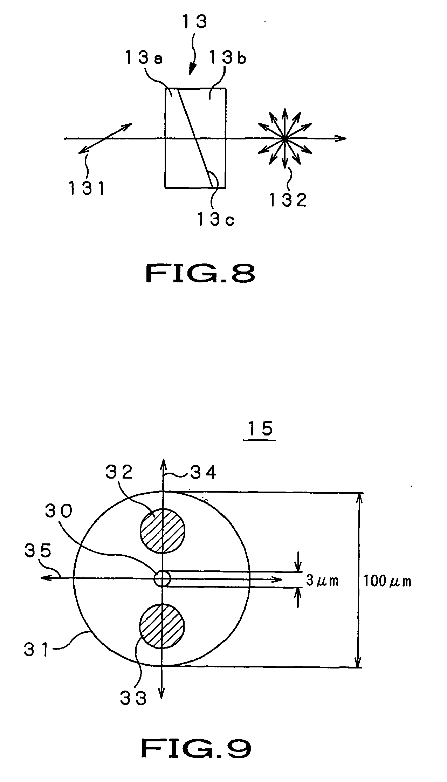

The polarization dissolving element 13 dissolves the polarization of the light beam emitted from the light source 12 and transmitted by way of the optical fiber 15. It is typically made of rock crystal, mica or organic resin. Now, a typical polarization dissolving element 13 that can be used for the purpose of the present invention will be described by referring to FIG. 8. FIG. 8 is a schematic cross sectional view of the polarization dissolving element 13. Referring to FIG. 8, the polarization dissolving element 13 is formed by cutting rock crystal 13a and quartz glass 13b to show inclined surfaces and bonded together along the inclined surfaces, which are indicated by a slope line 13c, by means of a transparent adhesive agent. Alternatively, mica or organic resin may be used for the polarization dissolving element 13. If incident light is linearly polarized light 131, the rock crystal 13a and the quartz glass 13b show respective thicknesses that change along the slope line 13c so that they may show a thickness of $\lambda/4$, $2\lambda/4$ and $3\lambda/4$ depending on the position on the slope line 13c. Therefore, if the flux of light has a width of about 1 mm, light coming out from the polarization dissolving element 13 that is diffracted by the quartz glass 13b is non-polarized random light 132. On the basis of this principle, it is possible for the polarization dissolving element 13 to turn a laser beam showing a given direction of polarization into non-polarized random light such as natural light.

The condenser lens 17 gathers the light beam whose polarization is nullified by the polarization dissolving element 13 and causes it to enter the polarization beam splitter 18.

The polarization beam splitter 18 divides the light beam gathered by the condenser lens 17 into a light beam having an S-polarized light component and a light beam having a P-polarized light component. Since the polarization of the light beam entering the polarization beam splitter 18 is nullified, the powers of the light beams coming out from the polarization beam splitter 18 is substantially equal to each other between the S-polarized light component and the P-polarized light component.

The S-polarized light beam is a polarized component that oscillates vertically relative to the plane of incidence formed by light striking the boundary plane of light and light reflected by the boundary plane of light. The P-polarized light beam is a polarized component that oscillates horizontally relative to the plane of incidence. The light beam having the S-polarized light component is reflected by the polarization beam splitter 18 whereas the light beam having the P-polarized light component is transmitted through the polarization beam splitter 18.

The diffraction grating 19 may be a volume type hologram. The diffraction grating 19 is fitted to an object of measurement. The diffraction grating 19 can be moved in directions indicated by arrows A in FIG. 7. The pitch of the diffraction grating 19 is typically 0.55 $\mu$m. The position (point Q) where the P-polarized light component transmitted through the polarization beam splitter 18 enters the diffraction grating 19 differs from the position (point P) where the S-polarized light component reflected by the polarization beam splitter 18 enters the diffraction grating 19.

The optical axis of the first 1/4 wave plate 20 fitted to the first mirror plane 22 of the reflection prism 24 is inclined by 45° relative to the direction of polarization of incident light. Similarly, the optical axis of the second 1/4 wave plate 21 fitted to the second mirror plane 23 of the reflection prism 24 is inclined by 45° relative to the direction of polarization of incident light.

The polarization element 25 arranged at the side of the light receiving element 26 is inclined by 45° relative to the direction of polarization of incident light. Therefore, the two light beams from the polarization beam splitter 18 give rise to an interference wave after passing through the polarization element 25. The light receiving element 26 converts the quantity of light of the interference wave into an electric signal.

Now, the operation of the displacement measurement apparatus 10 including the above-described components will be described below. Coherent light or low coherent light emitted from the light source 12 is gathered by the condenser lens 14. The light beam gathered by the condenser lens 14 is made to enter the less expensive single mode type optical fiber 15.

The optical fiber 15 transmits the light beam entering it by way of its entrance end 15a without regulating the polarization thereof and emits it from its exit end 15b. The light beam transmitted from the optical fiber 15 and output from the exit end 15b then enters the polarization dissolving element 13 of the detecting section 16.

The polarization dissolving element 13 nullifies and dissolves the polarization of the light beam emitted from the exit end 15b of the optical fiber 15 so as to turn it into a non-polarized light beam. Thus, if the optical fiber 15 is bent by the external force and/or the stress applied to it to disturb the polarization of the transmitted light beam, the polarization dissolving element 13 nullifies and dissolves the polarization of the transmitted light beam after coming out from the exit end 15b. In other words, the displacement measurement apparatus 10 can reduce the disturbances of polarization due to the bend and/or stress, if any, of the optical fiber 15.

The light beam whose polarization is nullified by the polarization dissolving element 13 is gathered by the condenser lens 17 and subsequently made to enter the polarization beam splitter 18. The polarization beam splitter 18 divides the incoming light beam into two light beams, one having an S-polarized light component and one having a P-polarized light component. The light beam having the S-polarized light component is reflected by the polarization beam splitter 18 and enters the diffraction grating 19 at point P. The light beam having the P-polarized light component is transmitted through the polarization beam splitter 18 and enters the diffraction grating 19 at point Q.

The light beams that enter the diffraction grating 19 at point P and point Q respectively are then diffracted in the respective directions defined by the formula below:

$$\sin \theta_1 + \sin \theta_2 = n \cdot \lambda / \Lambda,$$

where $\theta_1$ represents the angle of incidence to the diffraction grating and $\theta_2$ represents the angle of diffraction from the diffraction grating, whereas A represents the pitch (width) of the grating and $\lambda$ and n respectively represent the wavelength of light and the degree of diffraction.

The light beam (S-polarized light component) diffracted at point P of the diffraction grating passes through the first 1/4 wave plate 20 fitted to the first mirror plane 22 of the reflection prism 24 and is reflected perpendicularly by the first mirror plane 22 so that it then returns to point P to become diffracted by the diffraction grating 19. Since the optical axis of the first 1/4 wave plate 20 is inclined by 45° relative to the direction of polarization of the incoming light beam, the light beam that returns to point P has a P-polarized light component. In other words, as the S-polarized light component diffracted at point P of the diffraction grating 19 passes through the first 1/4 wave plate 20 and subsequently is reflected by the first mirror plane 22 of the reflection prism 24 so as to pass through the first 1/4 wave plate 20 once again, the axis of polarization of the returning light beam is orthogonal relative to the axis of polarization of the forwardly moving light beam.

Similarly, the light beam (P-polarized light component) diffracted at point Q of the diffraction grating passes through the second 1/4 wave plate 21 fitted to the second mirror plane 23 of the reflection prism 24 and is reflected perpendicularly by the reflection prism 24 so that it then returns to point Q to become diffracted by the diffraction grating 19. Since the optical axis of the second 1/4 wave plate 21 is inclined by 45° relative to the direction of polarization of the incoming light beam, the light beam that returns to point Q has an S-polarized light component. In other words, as the P-polarized light component diffracted at point Q of the diffraction grating 19 passes through the second 1/4 wave plate 21 and subsequently is reflected by the second mirror plane 23 of the reflection prism 24 so as to pass through the second 1/4 wave plate 21 once again, the axis of polarization of the returning light beam is orthogonal relative to the axis of polarization of the forwardly moving light beam.

The light beams diffracted once again at point P and point Q respectively in this way then return to the polarization beam splitter 18. Since the light beam coming back from point P has a P-polarized light component, it is transmitted through the polarization beam splitter 18. Since the light beam coming back from point Q has an S-polarized light component, it is reflected by the polarization beam splitter 18. Therefore, the light beams coming back from point P and point Q respectively are put together by the polarization beam splitter 18 and then enters the polarization element 25.

The polarization element 25 causes the two light beams that are put together by the polarization beam splitter 18 to interfere with each other. The light receiving element 26 converts the quantity of light of the interference light produced by the interference at the polarization element 25 to obtain an interference signal. Then, the displacement measurement apparatus 10 measures the quantity of movement not larger than nanometer (nm) order of the diffraction grating 19 that is moving in the directions of the arrows A according to the interference signal.

The interference signal can be expressed by Acos(4Kx + δ), where K represents $2\pi/\Lambda$ and x represents the quantity of displacement while δ represents the initial phase. If, for example, the diffraction grating 19 is formed with a pitch A of 0.55 $\mu$m, a cycle of the interference wave corresponds to a quantity of movement of the diffraction grating 19 of 0.1375 $\mu$m and hence such a small movement can be measured by the displacement measurement apparatus 10. However, as the interference wave is converted into an electric signal and interpolation of 200 is introduced typically by means of A/D conversion, it is possible to realize a very fine resolution of about 0.6895 nm. It is needless to say that the signal output has to be very stable particularly in the case of measurement of displacement with a fine resolution of less than 10 nm. It is possible to stabilize the percentage modification of the interference wave that is obtained by causing two light beams to pass through the polarization element 25 by means of the polarization dissolving element 13 that nullifies the polarization of the light beam emitted from the optical transmission unit 11 in order to minimize the influence of fluctuations of polarization caused by the optical transmission. Thus, it is possible to measure a displacement highly stably with a high resolution level.

As described above, the displacement measurement apparatus 10 includes a polarization dissolving element 13 arranged between the exit end 15b of the optical fiber 15 and the condenser lens 17 so that it can minimize the disturbances of polarization due to the bend and/or the stress of the optical fiber 15. Additionally, it can detect a displacement highly accurately. Still additionally, since a single mode optical fiber can be used for the optical fiber 15, it does no longer require a difficult operation of aligning axes of polarization unlike an arrangement where a polarization holding optical fiber is used. Furthermore, the present invention provides an advantage that light sources that can be used for the displacement measurement apparatus 10 include not only light emitting diodes but also super luminescence diodes, multimode lasers, single mode lasers and other light sources regardless of coherence length.

However, for the purpose of the present invention, a polarization holding type optical fiber may alternatively be used for the optical fiber 15. A polarization holding type optical fiber has a structure as shown in FIG. 9, where a core 30 having a cross section with a diameter of 3 $\mu$m is surrounded by a clad 31 to show a coaxial profile with a diameter of 100 $\mu$m. Both the core 30 and the clad 31 are typically made of quartz glass but shows respective refractive indexes that are different from each other. The refractive index of the core 30 is higher than that of the clad 31. As light with a wavelength $\lambda$ of 600 to 700 nm is fed into the core 30, it is transmitted through the core as it is reflected by the boundary of the core 30 and the clad 31 having a relatively low refractive index. Two glass rods 32 and 33 having a circular cross section are arranged at opposite sides of the core 30 so as to sandwich the core 30. The two glass rods 32 and 33 show a same thermal expansion coefficient and operate to contract the entire clad 31. They operate to cool the entire clad 31 and maintain the stress applied to the core 30 to a constant level. The line that connects the centers of the two glass rods 32 and 33 and those of the core 30 and the clad 31 operates as optical axis 34. The axis of polarization of the light beam emitted from the light source 12 is aligned with the optical axis 34 of the optical fiber 15 of the polarization holding type by way of the polarization plate 13 and the condenser lens 14 before the light beam is made to enter the optical fiber 15. An elliptic core type optical fiber of the polarization holding type having a core whose cross section is elliptic will alternatively be used for the purpose of the present invention.

When an optical fiber 15 of the polarization holding type is used, it is important to align the axis of polarization of the light beam emitted from the light source 42 with the optical axis 34 or axis 35 by way of a polarization plate 43 and the condenser lens 44 before it enters the optical fiber 15. However, even when an optical fiber of the polarization holding type is used, the adjustment operation of aligning the axis of polarization of incident light with the axis of the optical fiber is not required to be performed very rigorously because the polarization dissolving element 13 is provided at the side of the exit end 15b of the optical fiber 15.

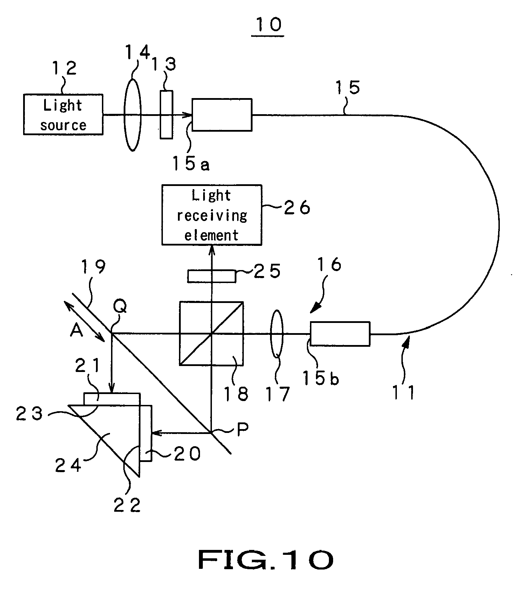

As shown in FIG. 10, the polarization dissolving element 13 may alternatively be arranged between the condenser lens 14 and the entrance end 15a of the optical fiber 15, in other words, at the side of the entrance end 15a of the optical fiber 15, in the displacement measurement apparatus 10. With such an arrangement, a light beam whose polarization is nullified by the polarization dissolving element 13 enters the optical fiber 15 of the single mode, for instance. However, if the polarization of the transmitted light beam is disturbed as the optical fiber 15 is bent by the external force and/or the stress applied to it, the light beam transmitted to the detection system 16 is not influenced by the bend and/or the stress because the light beam that passes through the optical fiber 15 is non-polarized.

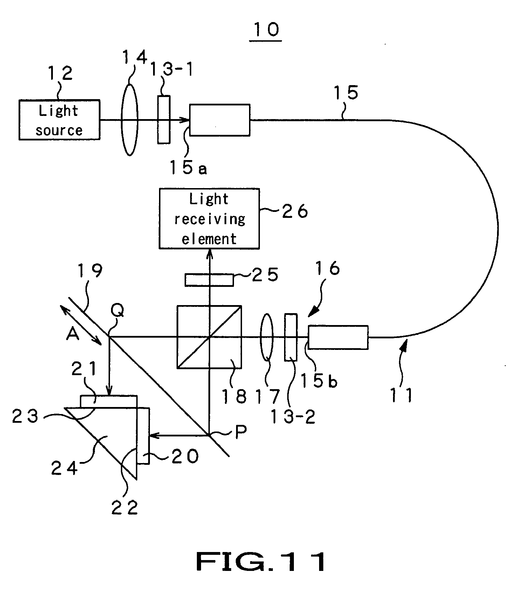

As shown in FIG. 11, two polarization dissolving elements 13-1, 13-2 may be arranged at the opposite ends of the optical fiber 15. The polarization dissolving element 13-1 is arranged between the condenser lens 14 and the entrance end 15a, whereas the polarization dissolving element 13-2 is arranged between the exit end 15b and the condenser lens 17. With this arrangement, the polarization of the polarized light beam is nullified at the entrance end of the optical fiber 15 and additionally the polarization of the light beam transmitted through the optical fiber 15 is further nullified at the exit end so that it is possible to dissolve the disturbances, if any, of polarization of the transmitted light beam that is caused by the bend and/or the stress of the optical fiber 15 provided that the polarization of the transmitted light beam is disturbed as the optical fiber 15 is bent by the external force and/or the stress applied to it.

In any of the displacement measurement apparatus 10 as illustrated in FIGS. 7, 10 and 11, the polarization dissolving element 13 may be integrally formed with an end face of the optical fiber 15.

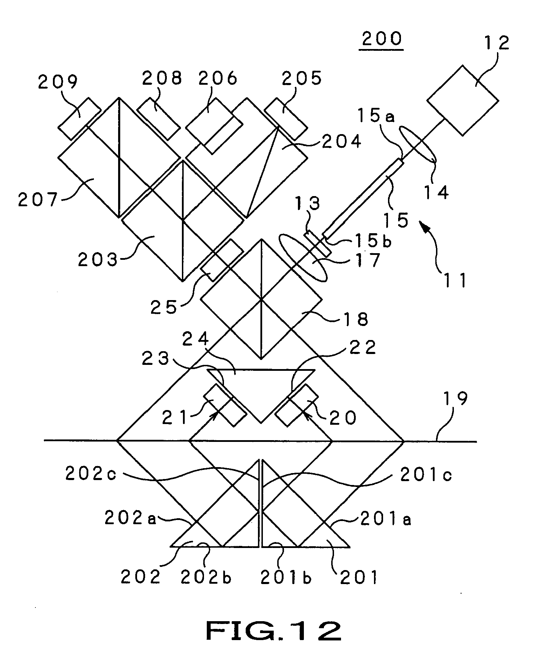

When the detection optical system that is so adapted to use an interference signal of Acos (8Kx + $\delta$) by increasing the number of times of diffraction may be used for a displacement measurement apparatus according to the invention to provide the same advantages. FIG. 12 is a schematic illustration of a displacement measurement apparatus 200 (an instance of application of the present invention) adapted to an increased number of times of diffraction. The displacement measurement apparatus 200 of FIG. 12 differs from any of the above-described displacement measurement apparatus according to the invention in that the two diffracted light beams produced as a light beam is divided into two light beams by the polarization beam splitter 18 and then diffracted by the diffraction grating 19 are respectively made to enter reflection prisms 201 and 202, become reflected by the reflection planes 201b and 202b and the reflection planes 201c and 202c of the reflection prisms 201 and 202, enter the diffraction grating 19 and become diffracted further by the diffraction grating 19 to get to the two phase plates 20 and 21 and a reflection prism 24 in the displacement measurement apparatus 200. The light beams reflected by the reflection prism 24 are respectively made to pass through the two phase plates 20 and 21 once again and become diffracted by the diffraction grating 19, reflected by the reflection prisms 201 and 202 once again and diffracted further by the diffraction grating 19 to get to the polarization beam splitter 18 in the displacement measurement apparatus 200.

The polarization beam splitter 18 puts the incoming polarized components together before it transmits them to the polarization element 25. The polarization element 25 causes the two light beams that are put together by the polarization beam splitter 18 to interfere with each other before it transmits them to beam splitter 203. The beam splitter 203 divides the incoming light beam into two light beams and causes one of them to enter a polarization beam splitter 204 and the other to enter another polarization beam splitter 207.

The light beam entering the polarization beam splitter 204 is divided into a light beam having an S-polarized light component and a light beam having a P-polarized light component, of which the light beam having the S-polarized light component is made to enter a photoelectric transducer 205 while the light beam having the P-polarized light component is made to enter a photoelectric transducer 206. On the other hand, the light beam entering the polarization beam splitter 207 is divided into a light beam having an S-polarized light component and a light beam having a P-polarized light component, of which the light beam having the S-polarized light component is made to enter a photoelectric transducer 208 while the light beam having the P-polarized light component is made to enter a photoelectric transducer 209.

Thus, the photoelectric transducers 205, 206 and the photoelectric transducers 208 and 209 can obtain an interference signal of Acos (8Kx + δ).

In this displacement measurement apparatus 200, since the polarization dissolving element 13 is arranged between the exit end of the optical fiber 15 and the condenser lens 17, the polarization dissolving element 13 nullifies the polarization of the light beam entering it from the optical fiber 15. Thus, the polarization dissolving element 13 nullifies the polarization of the light beam that has been emitted from the exit end to dissolve the polarization provided that the polarization of the transmitted light beam is disturbed as the optical fiber 15 is bent by the external force and/or the stress applied to it. In other words, the displacement measurement apparatus 200 can reduce the disturbances of polarization due to the bend and/or the stress, if any, of the optical fiber 15.

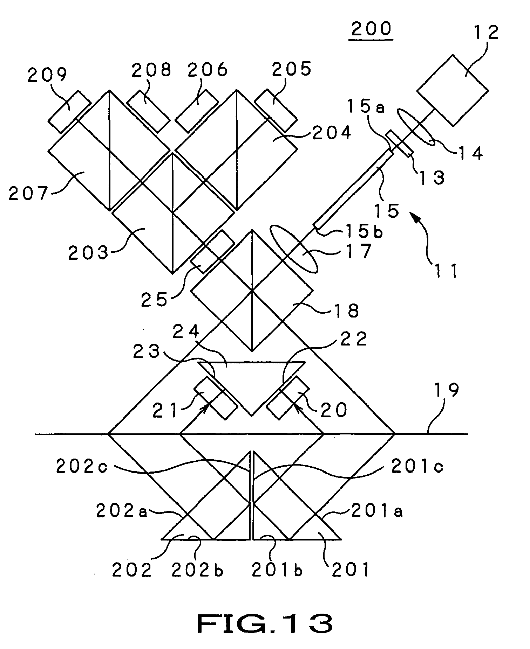

As shown in FIG. 13, the polarization dissolving element 13 may alternatively be arranged between the condenser lens 14 and the entrance end 15a of the optical fiber 15, in other words at the side of the entrance end 15a of the optical fiber 15, in the displacement measurement apparatus 200. With such an arrangement, a light beam whose polarization is nullified by the polarization dissolving element 13 enters the optical fiber 15 of the single mode, for instance. However, if the polarization of the transmitted light beam is disturbed as the optical fiber 15 is bent by the external force and/or the stress applied to it, the light beam transmitted to the detection system 16 is not influenced by the bend and/or the stress because the light beam that passes through the optical fiber 15 is non-polarized.

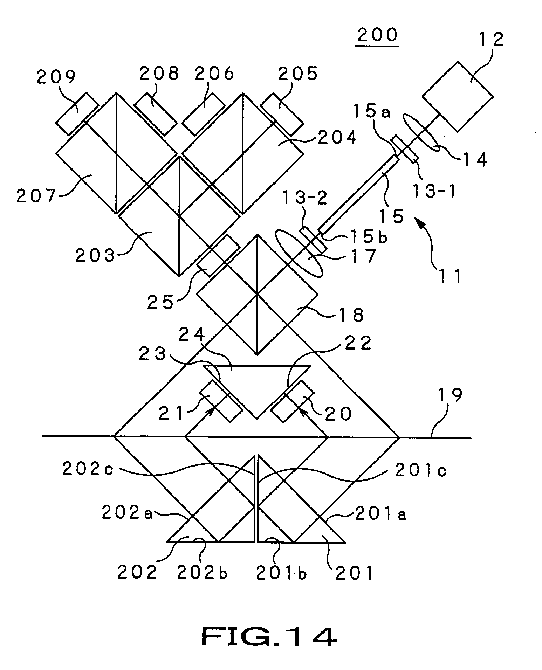

As shown in FIG. 14, two polarization dissolving elements 13-1, 13-2 may be arranged at the opposite ends of the optical fiber 15. The polarization dissolving element 13-1 is arranged between the condenser lens 14 and the entrance end 15a, whereas the polarization dissolving element 13-2 is arranged between the exit end 15b and the condenser lens 17. With this arrangement, the polarization of the polarized light beam is nullified at the entrance end of the optical fiber 15 and additionally the polarization of the light beam transmitted through the optical fiber 15 is further nullified at the exit end so that it is possible to dissolve the disturbances, if any, of polarization of the transmitted light beam that is caused by the bend and/or the stress of the optical fiber 15 provided that the polarization of the transmitted light beam is disturbed as the optical fiber 15 is bent by the external force and/or the stress applied to it.

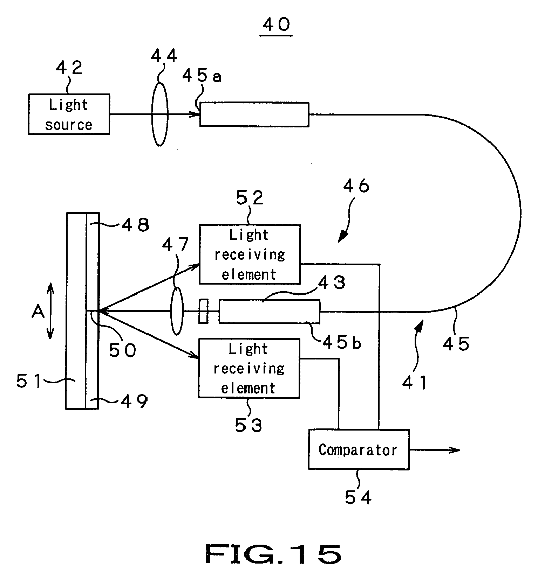

FIG. 15 is a schematic illustration of a fixed point detection apparatus 40 according to the present invention, showing the configuration thereof. Such a fixed point detection apparatus 40 typically finds applications in the field of manufacturing semiconductors that requires measurement of a quantity of movement of not larger than nanometer (nm) order and in the field of manufacturing liquid crystals. Thus, the sensor of the fixed point detection apparatus 40 is not allowed to emit heat so that the light source 42 is separated from the detecting section 46 and the light beam emitted from the light source 42 is transmitted to the detecting section 46 by way of an optical fiber 45.

A fixed point detection apparatus 40 is used with a displacement measurement apparatus 10 as described above in such a way that it detects the absolute position of a fixed point on the diffraction grating 19 of the displacement measurement apparatus 10. As described above, the displacement measurement apparatus 10 utilizes a diffraction grating 19 with a very small pitch A of 0.55 μm. If a power failure or a failure of the ongoing process occurs by accident while a measuring operation is proceeding on the diffraction grating 19, it is no longer possible to resume the measuring operation and locate the point where the measuring operation was being conducted on the diffraction grating if the failure is removed. A fixed point detection apparatus 40 is developed for the purpose of being able to constantly detect the absolute position of a point on the diffraction grating. Two holograms respectively having different pitches are used for two diffraction gratings 48 and 49 and a fixed point is detected by detecting the adjacently located edges 50 of the two diffraction gratings.

As shown in FIG. 15, the fixed point detection apparatus 40 includes a light source 42 for emitting a light beam, a condenser lens 44 for gathering the light beam from the light source 42 and an optical fiber 45 for transmitting linearly polarized light that is gathered by the condenser lens 44.

The fixed point detection apparatus 40 additionally includes a polarization dissolving element 43 for nullifying the polarized component of the light beam transmitted through the optical fiber 45, a condenser lens 47 for gathering the light beam whose polarization is nullified by the polarization dissolving element 43, two diffraction gratings 48 and 49 adapted to converge the light beam gathered by the condenser lens 47 at or near the boundary section (edges) 50 and arranged side by side, two light receiving elements 52 and 53 for receiving the diffracted light beams diffracted respectively by the two diffraction gratings 48 and 49 and a comparator 54 for comparing the quantities of light received by the two light receiving elements 52 and 53. The fixed point is located according to the signal obtained as a result of the comparison.

Now, each of the components of the fixed point detection apparatus will be described in greater detail below. Firstly, the light source 42 emits a coherent light beam or an incoherent light beam. It may have polarizing characteristics or may not have any polarizing characteristics.

The optical fiber 45 may be a less costly single mode type optical fiber that does not hold polarization. When a single mode type optical fiber that does not hold polarization, it is not necessary to regulate the axis of polarization of the light beam emitted from the light source 42.

The polarization dissolving element 43 dissolves the polarization of the light beam emitted from the light source 42 and transmitted by way of the optical fiber 45. It is typically made of rock crystal, mica or organic resin. Since it is similar to the polarization dissolving element 13 illustrated in FIG. 8 and described above, it will not be described here any further.

The two diffraction gratings 48 and 49 are arranged side by side in such a way that the linearly polarized light beam that is gathered by the condenser lens 47 is focused at or near the boundary section (edges) 50 thereof. The two diffraction gratings 48 and 49 may show respective grating vectors that are different form each other or respective grating pitches that are different from each other. They may be selected from reflection type holograms or blazed diffraction gratings. With the arrangement illustrated in FIG. 10, the two diffraction gratings 48 and 49 are of the reflection type and emit respective diffracted light beams of the +1st degree from the sides thereof where they receive the incident light beams. Alternatively, diffraction gratings of the transmission type may be used.

The two light receiving elements 52 and 53 respectively convert the intensities of the diffracted light beams coming from the two diffraction gratings 48 and 49 into electric signals. The two light receiving elements 52 and 53 are arranged at the side of the two diffraction gratings 48 and 49 same as the side where the exit end 45b of the optical fiber 45 is located.

The comparator 54 compares the electric signals from the two light receiving elements 52 and 53. The outcome of comparison of the comparator 54 is supplied to a control section (not shown). The control section determines a point where the two signals show a predetermined magnitude as fixed point according to the outcome of comparison of the comparator 54. A point that makes the two signals show a same output level may be defined as fixed point.

Thus, the light transmission unit 41 that includes the light source 42, the polarization plate 43, the condenser lens 44 and the optical fiber 45 can minimize the influence of the fluctuations of polarization due to the bend and/or stress, if any, of the optical fiber 45 by nullifying the polarization of the polarized light beam emitted from the exit end 45b of the optical fiber 45.

The light beam emitted from the optical fiber 45 of the light transmission unit 41 is gathered by the condenser lens 47 of the detecting section 46 and is focused at or near the boundary section (edges) 50 of the two diffraction gratings 48 and 49 that are movable in the directions of arrows A.

The intensities of the diffracted light beams obtained from the two diffraction gratings 48 and 49 are converted into electric signals respectively by the light receiving elements 52 and 53. Then, a point where the two signals show a predetermined magnitude is determined as fixed point according to the outcome of comparison of the comparator 54 that compares the two signals. As pointed out above, a point that makes the two signals show a same output level may be defined as fixed point. It will be appreciated that the comparison output of the comparator 54 becomes equal to 0 when the two signals agree with each other. However, the output of the comparator 54 also becomes equal to 0 when no diffracted light exists and hence the outputs of the light receiving elements are equal to 0. Therefore, it is desirable to make the fixed point detection apparatus show an offset from the viewpoint of preventing recognition errors from taking place. Thus, it is desirable to select a numerical value of an arbitrarily selected magnitude that can be easily discriminated from 0.

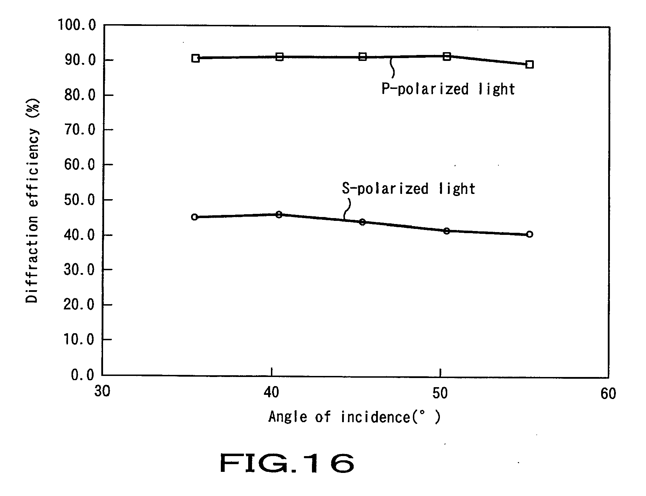

Thus, the fixed point detection apparatus 40 of this embodiment detects the absolute position of the diffraction gratings 48 and 49 fitted onto an object of measurement 51. Generally, the quantity of light that a diffraction grating diffracts varies depending on the diffracted component of incident light. In other words, the S-polarized light component and the P-polarized light component show respective diffraction efficiencies that are different from each other. For example, when the diffraction efficiency of a reflection type hologram having a pitch of grating of 0.55 $\mu$m is observed by using a light beam emitted from a light source with a wavelength of 780 nm, it will be confirmed that the difference efficiency varies remarkably between the S-polarized light component and the P-polarized light component as seen from FIG. 16. Referring to FIG. 16, when the angle of incidence is between 35° and 55°, the diffraction efficiency of the S-polarized light component is between 46% and 41 % whereas the diffraction efficiency of the P-polarized light component is between 91 % and 92% to prove that the diffraction efficiency of the P-polarized light component is by far higher. Additionally, the difference is dispersed to a certain extent because of the difference of individuality that is observed among diffraction gratings in the manufacturing process.

Thus, it is now possible to always stably detect a fixed point without being influenced by the above-identified factors by eliminating polarized components from the light beam striking the diffraction gratings.

As the fixed point detection apparatus 40 as illustrated in FIG. 15 includes a polarization dissolving element 43 at the side of the exit end 45b of the optical fiber 45, it nullifies the polarization of the light beam coming out form the optical fiber 45. Thus, if the optical fiber 45 is bent by the external force and/or the stress applied to it to disturb the polarization of the transmitted light beam, the polarization dissolving element 43 nullifies and dissolves the polarization of the transmitted light beam after coming out from the exit end 45b. In other words, the fixed point detection apparatus 40 can reduce the disturbances of polarization due to the bend and/or stress, if any, of the optical fiber 45.

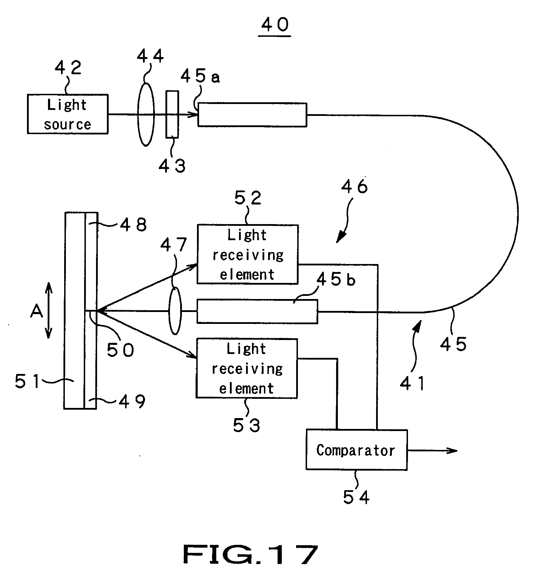

As shown in FIG. 17, the polarization dissolving element 43 may alternatively be arranged between the condenser lens 44 and the entrance end 45a of the optical fiber 45, in other words, at the side of the entrance end 45a of the optical fiber 45, in the fixed point detection apparatus 40. With such an arrangement, a light beam whose polarization is nullified by the polarization dissolving element 43 enters the optical fiber 45 of the single mode, for instance. However, if the polarization of the transmitted light beam is disturbed as the optical fiber 45 is bent by the external force and/or the stress applied to it, the light beam transmitted to the detection system 46 is not influenced by the bend and/or the stress because the light beam that passes through the optical fiber 45 is non-polarized.

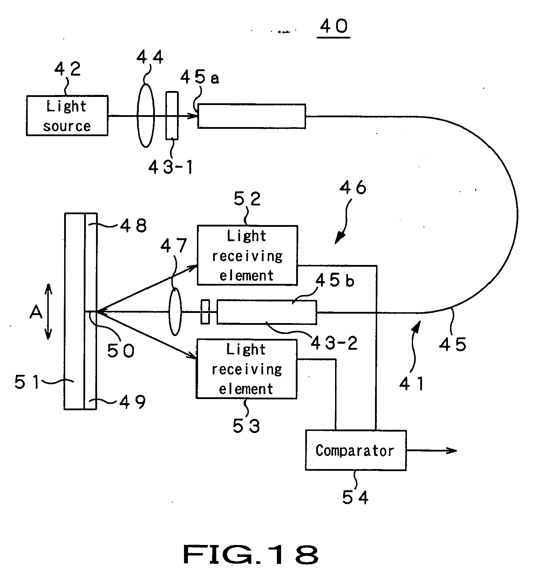

As shown in FIG. 18, two polarization dissolving elements 43-1, 43-2 may be arranged at the opposite ends of the optical fiber 45. The polarization dissolving element 43-1 is arranged between the condenser lens 44 and the entrance end 45a, whereas the polarization dissolving element 43-2 is arranged between the exit end 45b and the condenser lens 47. With this arrangement, the polarization of the polarized light beam is nullified at the entrance end of the optical fiber 45 and additionally the polarization of the light beam transmitted through the optical fiber 45 is further nullified at the exit end so that it is possible to dissolve the disturbances, if any, of polarization of the transmitted light beam that is caused by the bend and/or the stress of the optical fiber 45 provided that the polarization of the transmitted light beam is disturbed as the optical fiber 45 is bent by the external force and/or the stress applied to it.

In any of the fixed point detection apparatus 40 as illustrated in FIGS. 15, 17 and 18, the polarization dissolving element 43 may be integrally formed with the optical fiber 45.

A polarization holding type optical fiber having a configuration as illustrated in FIG. 9 may alternatively be used for the optical fiber 45. Although not described here in greater detail, when an optical fiber 45 of the polarization holding type is used, it is important to align the axis of polarization of the light beam emitted from the light source 42 with the optical axis 34 or axis 35 by way of a polarization plate 43 and the condenser lens 44 before it enters the optical fiber 45. However, even when an optical fiber of the polarization holding type is used, the adjustment operation of aligning the axis of polarization of incident light with the axis of the optical fiber is not required to be performed very rigorously because the polarization dissolving element 43 is provided at the entrance end, exit end or the both ends.

It should be understood by those skilled in the art that various modifications, combinations, sub-combinations and alterations may occur depending on design requirements and other factors insofar as they are within the scope of the appended claims or the equivalents thereof.

## Claims

1. A displacement detection apparatus comprising:

   a light source that emits light;
   a condenser lens that gathers light emitted from the light source;
   an optical fiber that transmits light gathered by the condenser lens;
   a polarization dissolving element that dissolves polarization of light gathered by the condenser lens;
   a diffraction grating fitted to an object of measurement to receive and diffract light transmitted by the optical fiber; and
   light receiving means for receiving light diffracted by the diffraction grating,
   the displacement of the object of measurement being detected by the quantity of diffracted light received by the light receiving means.

2. The apparatus according to claim 1, wherein the polarization dissolving element is made of rock crystal, mica or organic resin.

**3.** The apparatus according to claim 1 or 2, wherein the polarization dissolving element is arranged at the entrance end of the optical fiber.

**4.** The apparatus according to claim 1 or 2, wherein the polarization dissolving element is arranged at the exit end of the optical fiber.

**5.** The apparatus according to claim 1 or 2, wherein the polarization dissolving element is arranged at each of the opposite ends of the optical fiber.

**6.** The apparatus according to claim 3, 4 or 5, wherein the polarization dissolving element is made integral with the corresponding end face of the optical fiber.

**7.** The apparatus according to any one of the preceding claims, wherein a single mode fiber is used for the optical fiber.

**8.** The apparatus according to any one of claims 1 to 6, wherein a polarization holding fiber is used for the optical fiber.

**9.** A displacement measurement apparatus comprising:

a light source that emits light;
a condenser lens that gathers light emitted from the light source;
an optical fiber that transmits light gathered by the condenser lens;
a polarization dissolving element that dissolves polarization of light emitted from the optical fiber;
a polarization beam splitter that divides the light transmitted by the optical fiber into two light beams;
a diffraction grating that is fitted to an object of measurement, receives the two light beams produced by the polarization beam splitter and produces diffracted light beams;
a phase plate that changes the polarizations of the two diffracted light beams produced by the diffraction grating;
two reflection mirrors that reflect the two diffracted light beams having the respective polarizations changed by the phase plate to lead them to the diffraction grating by way of the phase plate;
a polarization element that causes the two diffracted light beams led to the diffraction grating by the two reflection mirrors, diffracted by the diffraction grating, made to enter the polarization beam splitter and reflected by or transmitted through the polarization beam splitter to interfere with each other; and
a light receiving element that receives the interference light obtained by the polarization element,
the displacement of the object of measurement being detected by the quantity of interference light received by the light receiving element.

**10.** A fixed point detection apparatus comprising:

a light source that emits light;
a condenser lens that gathers light emitted from the light source;
an optical fiber that transmits light gathered by the condenser lens;
a polarization dissolving element that dissolves polarization of light emitted from the optical fiber;
a condenser lens that gathers light emitted from the optical fiber;
two diffraction gratings arranged side by side to receive and diffract light transmitted by way of the optical fiber;
two light receiving means for receiving the light beams diffracted by the two diffraction gratings; and
comparing means for comparing the quantities of light received by the two light receiving means,
a fixed point being determined according to the outcome of the comparison of the quantities of light received by the two light receiving means.

**11.** The fixed point detection apparatus according to claim 10, wherein a point where the signal obtained comparing the quantities of light received by the two light receiving means shows an arbitrarily selected magnitude is determined to be a fixed point.

**12.** A displacement detection apparatus comprising:

a light source that emits light;
a condenser lens that gathers light emitted from the light source;
an optical fiber that transmits light gathered by the condenser lens;
a polarization dissolving element that dissolves polarization of light gathered by the condenser lens;
a diffraction grating fitted to an object of measurement to receive and diffract light transmitted by the optical fiber; and
a light receiving section that receives light diffracted by the diffraction grating, the displacement of the object of measurement being detected by the quantity of diffracted light received by the light receiving section.

**13.** A fixed point detection apparatus comprising:

a light source that emits light;
a condenser lens that gathers light emitted from the light source;

an optical fiber that transmits light gathered by the condenser lens;

a polarization dissolving element that dissolves polarization of light emitted from the optical fiber;

a condenser lens that gathers light emitted from the optical fiber;

two diffraction gratings arranged side by side to receive and diffract light transmitted by way of the optical fiber;

two light receiving section that receives the light beams diffracted by the two diffraction gratings; and

a comparing section that compares the quantities of light received by the two light receiving section,

a fixed point being determined according to the outcome of the comparison of the quantities of light received by the two light receiving section.

FIG.1

FIG.2

FIG.3

FIG.4

FIG.5

<u>180</u>

## FIG.6

<u>1 0</u>

FIG.7

13

13a    13b

131

13c

**FIG.8**

15

32   34

30

35

31

33

3 μm

100 μm

**FIG.9**

FIG.10

<u>1 0</u>

# FIG.11

FIG.12

FIG.13

FIG.14

FIG.15

FIG.16

FIG.17

_40_

Light source 42
44
45a
43-1

52
Light receiving element
47
46
45b
48
A
50
43-2
45
41
Light receiving element
53
51
49

Comparator
54

# FIG.18

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2005092938 A
- JP 4324316 A